# EUROPEAN PATENT APPLICATION

(11) **EP 4 836 144 A1**
(43) Date of publication of application: **04.11.2026**
(21) Application number: 25901575.8
(22) Date of filing: 31.10.2025
(51) Int. Cl.: H01M 50/264, H01M 10/655, H01M 10/04, H01M 50/367

(54) **BATTERY MODULE AND BATTERY PACK INCLUDING SAME**

(30) Priority: 05.12.2024 KR 20240179122; 27.10.2025 KR 20250156692
(71) Applicant: LG Energy Solution, Ltd., Seoul 07335 (KR)
(72) Inventor: LEE, Taekyeong, Daejeon 34122 (KR)
(74) Representative: Plasseraud IP
(86) International application number: PCT/KR2025/017759
(87) International publication number: WO 2026/121580

(57) **Abstract**

A battery module according to an embodiment of the present disclosure comprises a battery cell stack including a plurality of cell banks formed by stacking a plurality of battery cells; a module frame in which the battery cell stack is housed; a thermal conductive resin layer that is formed on an inner side surface of the module frame so as to make contact with one side of the battery cell stack, and fixes one side of the battery cell stack to the module frame; and a support member that supports the other side of the battery cell stack between the battery cell stack and the module frame.

## Description

### TECHNICAL FIELD

### Cross-Reference to Related Application(s)

This application claims priority to and the benefit of Korean Patent Application No. 10-2024-0179122, filed on December 5, 2024, and Korean Patent Application No. 10-2025-0156692, filed on October 27, 2025, the entire contents of which are incorporated herein by reference.

The present disclosure relates to a battery module and a battery pack including the same, and more particularly, to a battery module including a support member that supports a battery cell stack, and a battery pack including the same.

### BACKGROUND

In modern society, as portable devices such as a mobile phone, a notebook computer, a camcorder and a digital camera has been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material, i.e., a battery case which seals and houses the electrode assembly together with an electrolyte.

Generally, the lithium secondary battery may be classified based on the shape of the exterior material into a can-type secondary battery in which the electrode assembly is embedded in a metal can, and a pouch-type secondary battery in which the electrode assembly is embedded in a pouch of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery unit, a large number of battery cells are connected to each other in series or in parallel to form a battery cell stack, thereby improving capacity and output. One or more battery units may be mounted together with various control and protection systems such as a battery management system (BMS), a battery disconnect unit (BDU) and a cooling system to form a battery pack.

A battery pack may include a battery module as a sub-component thereof, and the battery module may include a battery cell as a sub-component thereof. In addition, the number of battery cells included in the battery unit or the number of battery units included in the battery pack may be variously determined according to the output or capacity of the battery pack required for an electric vehicle or an energy storage system (ESS).

Meanwhile, in a bottom venting structure that discharges gases generated in the battery cells to a lower part of the battery module and battery pack, a thermal conductive resin layer may be formed on an upper part of the module frame, and the battery cells may be fixed to the upper part of the module frame by the thermal conductive resin layer. At this time, a separation space may exist between the battery cells and the lower part of the module frame in order to discharge gases generated in the battery cells and ensure minimal assembly errors. According to this structure, if the thermal conductive resin layer is cracked due to swelling of the battery cells or external impact, the battery cells may fall down and be damaged. Therefore, a structure that can improve stability even when the battery cells are fixed to the upper part of the module frame for performing the bottom venting is required.

### [DETAILED DESCRIPTION OF THE INVENTION]

### [Technical Problem]

It is an object of the present disclosure to support a battery cell stack fixed to an upper part of a module frame, thereby improve structural stability.

However, the technical objects to be solved by embodiments of the present disclosure are not limited to the above-mentioned objects, and can be variously expanded within the scope of the technical idea included in the present disclosure.

### [Technical Solution]

According to an aspect of the present disclosure, provided is a battery module comprising: a battery cell stack including a plurality of cell banks formed by stacking a plurality of battery cells; a module frame in which the battery cell stack is housed; a thermal conductive resin layer that is formed on an inner side surface of the module frame so as to make contact with one side of the battery cell stack, and fixes one side of the battery cell stack to the module frame; and a support member that supports the other side of the battery cell stack between the battery cell stack and the module frame.

In an embodiment, the thermal conductive resin layer may be formed on a lower surface of an upper plate of the module frame and fix an upper side of the battery cell stack to the upper plate.

In an embodiment, the support member may be formed on an upper surface of a lower plate of the module frame and support a lower side of the battery cell stack.

In an embodiment, the plurality of battery cells may be stacked along a width direction of the battery module, and the support member may have a shape that extends along a longitudinal direction of the battery module, which is perpendicular to the width direction of the battery module.

In an embodiment, the battery cell stack may further comprise a compression pad disposed between the plurality of cell banks, and the support member may be disposed below the compression pad.

In an embodiment, the support member may be disposed below the compression pad so that both sides of the battery module along the width direction make contact with at least a part of the lower part of the cell banks disposed on both sides of the compression pad.

In an embodiment, the upper surface of the support member may have a shape that corresponds to the lower surface of the compression pad and the cell bank.

In an embodiment, the lower plate may be formed with a venting hole.

In an embodiment, the venting hole and the support member may be formed in mutually different regions of the lower plate.

In an embodiment, the battery module may further comprise an elastic member that is disposed to wrap at least a part of the battery cell stack and fixes the battery cell stack to the upper plate.

In an embodiment, the elastic member may be disposed to make contact with the upper surface and both side surfaces of the battery cell stack.

In an embodiment, the elastic member may comprise an extension part formed to extend long; and a first bent part and a second bent part that are bent in a direction perpendicular to the extension direction of the extension part from each of both ends of the extension part.

In an embodiment, the elastic member may be disposed so that the extension part makes contact with the upper surface of the battery cell stack, and the first bent part and the second bent part each make contact with both side surfaces of the battery cell stack.

In an embodiment, the extension part may be disposed between the upper surface of the battery cell stack and the lower surface of the upper plate to be fixed to the upper plate.

In an embodiment, the first bent part and the second bent part may be respectively fitted and fixed between each of the both side surfaces of the battery cell stack and the side surface plates of the module frame.

In an embodiment, the elastic members may be formed in a plurality, the plurality of elastic members may be disposed so as to be spaced apart from each other along the longitudinal direction of the battery module, and the thermal conductive resin layer may be formed between the plurality of elastic members that are spaced apart from each other.

According to another aspect of the present disclosure, provided is a battery pack comprising: the battery module; and a pack case in which the battery module is packaged inside.

### [Advantageous Effects]

According to embodiments of the present disclosure, since the battery cell stack fixed to the upper part of the module frame can support using a support member formed at the lower part of the module frame, the weight, external impacts and vibrations of the battery cell stack can be distributed to the module frame, thereby improving structural stability.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view of a battery module according to an embodiment of the present disclosure.
FIG. 2 is an exploded perspective view of the battery module shown in FIG. 1.
FIG. 3 is a perspective view showing one battery cell included in the battery cell stack of FIG. 2.
FIG. 4 is a cross-sectional view taken along line IV-IV' of FIG. 1.
FIG. 5 is an enlarged view of section A of FIG. 4.
FIG. 6 is a comparative example of the present disclosure, showing the internal structure of a battery module according to a comparative example.
FIG. 7 is a diagram showing the internal structure of a battery module according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the claimed invention. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Meanwhile, although terms representing directions such as upward, downward, left, right, forward, and backward are used in the present embodiment, it would be obvious to those skilled in the art that these terms are only for convenience of explanation and may vary depending on the location of the target object or the location of the observer.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

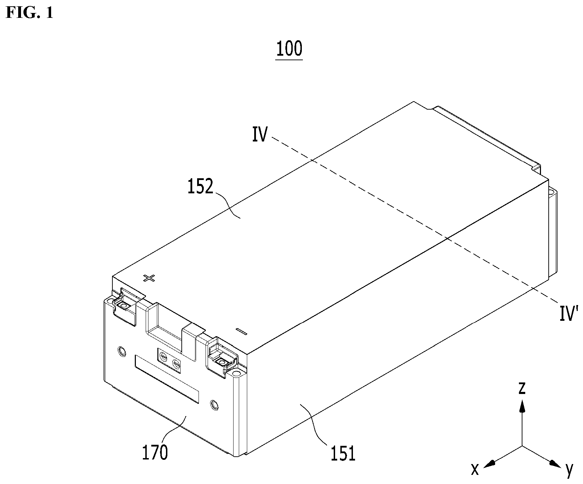

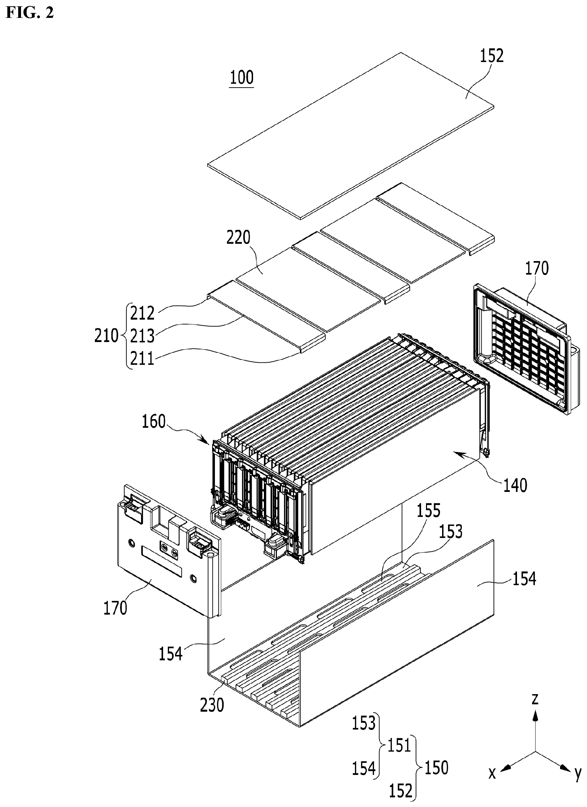

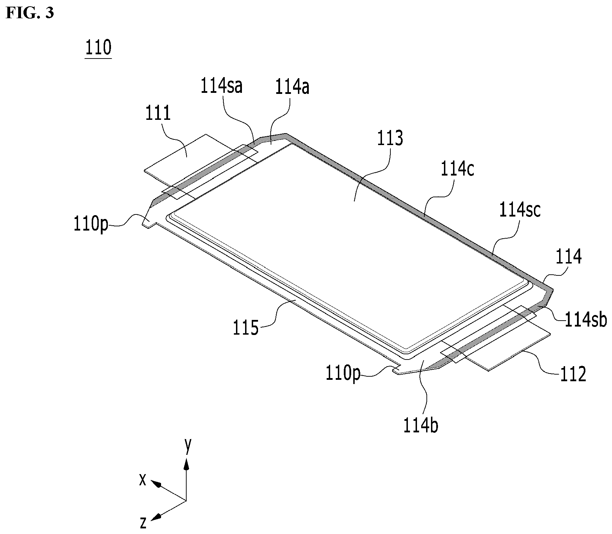

FIG. 1 is a perspective view of a battery module 100 according to an embodiment of the present disclosure. FIG. 2 is an exploded perspective view of the battery module 100 shown in FIG. 1. FIG. 3 is a perspective view showing one battery cell 110 included in the battery cell stack 140 of FIG. 2.

Referring to FIGS. 1 and 2, a battery module 100 may include a battery cell stack 140 in which a plurality of battery cells 110 are stacked in one direction (the y-axis direction in the drawing), a module frame 150 in which the battery cell stack 140 is housed, end plates 170 that cover the front and rear surfaces of the battery cell stack 140, and a busbar frame assembly 160 disposed between the end plate 170 and the front and rear surfaces of the battery cell stack 140.

The battery cell stack 140 may include a plurality of cell banks 120 and compression pads 130. The cell bank 120 may be formed by stacking a plurality of battery cells 110 in one direction (the y-axis direction in the drawing). The compression pad 130 may be disposed between the plurality of cell banks 120 and/or between the side surface plate 154 of the module frame 150 and the cell bank 120. In other words, the plurality of cell banks 120 may be stacked along one direction, and the compression pad 130 may be disposed between the plurality of cell banks 120 and/or between the side surface plate 154 of the module frame 150 and the cell bank 120 to form a single battery cell stack 140.

The battery cell 110 may be a pouch-type battery cell. The battery cell 110 may be produced by housing the electrode assembly in a pouch case made of a laminate sheet including a resin layer and a metal layer, and then thermally fusing the sealing part of the pouch case. The battery cells 110 may be formed in a plurality, and the plurality of battery cells 110 may form a battery cell stack 140 that is stacked so as to be electrically connected to each other.

Further, referring to FIG. 3, the battery cell 110 may have a structure in which two electrode leads 111, 112 protrude from one end 114a and the other end 114b of the battery main body 113 toward mutually opposite direction. The battery cell 110 may be produced by adhering both end parts 114c, 114d of the pouch case 114 and both side surfaces 114c connecting them in a state in which an electrode assembly (not shown) is housed in the pouch case 114. In other words, the battery cell 110 according to the present embodiment has a total of three sealing parts 114sa, 114sb, 114sc, wherein the sealing parts 114sa, 114sb, 114sc have a structure that is sealed by a method such as thermal fusion, and the remaining other side part may be formed of a connection part 115.

The connection part 115 is a region that extends long along one edge of the battery cell 110, and a protruding part 110p of the battery cell 110 may be formed at the end of the connection part 115. The protruding part 110p may be formed on at least one of the two ends of the connection part 115, and may protrude in a direction perpendicular to the direction in which the connection part 115 extends. The protruding part 110p may be located between one of the sealing parts 114sa, 114sb of both ends 114a, 114b of the cell case 114 and the connection part 115.

The cell case 114 is generally formed in a laminated structure of resin layer/metal thin film layer/resin layer. For example, when the surface of the cell case is formed of an O (oriented)-nylon layer, it tends to slide easily due to external impact when stacking a plurality of battery cells to form a medium- or large-sized battery module. Therefore, in order to prevent this problem and maintain a stable stacked structure of battery cells 110, a tacky adhesive such as a double-sided tape or a chemical adhesive that bonds through chemical reactions during adhesion can be adhered to the surface of the battery case to form a battery cell stack 140.

The module frame 150 may include a U-shaped frame 151 of which an upper surface, a front surface, and a rear surface are opened, and an upper plate 152 that covers the opened upper surface of the U-shaped frame 151. The U-shaped frame 151 may include a lower plate 153 and side surface plates 154 formed by protruding from both ends of the lower plate 153, respectively. The both edges of the lower plate 153 may be portions that face each other along the width direction of the battery module 100 (the y-axis direction in the drawing). Here, the width direction of the battery module 100 may refer to the direction in which the plurality of battery cells 110 are stacked (the y-axis direction in the drawing).

The busbar frame assembles 160 may be disposed on the front and rear surfaces of the battery cell stack 140, respectively, and connected to the battery cell stack 140. The busbar frame assemblies 160 may be disposed between the battery cell stack 140 and the end plate 170. The busbar frame assembly 160 may allow the plurality of battery cells 110 to be electrically connected to one another. The busbar frame assembly 160 may electrically connect the plurality of battery cells 110 to an external BMS (Battery Management System), etc. The busbar frame assemblies 160 disposed on the front and rear surfaces of the battery cell stack 140 may be electrically connected to each other using a flexible flat cable (FFC), etc. The busbar frame assembly 160 may be configured to measure voltage and temperature information of the battery cells 110 and transmit the information to an external BMS.

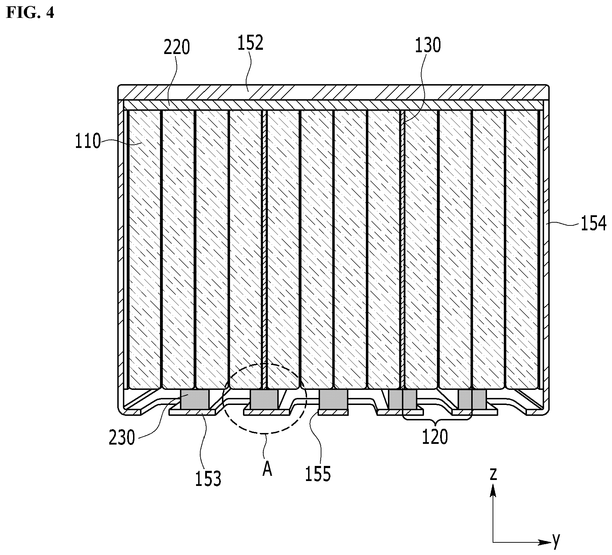

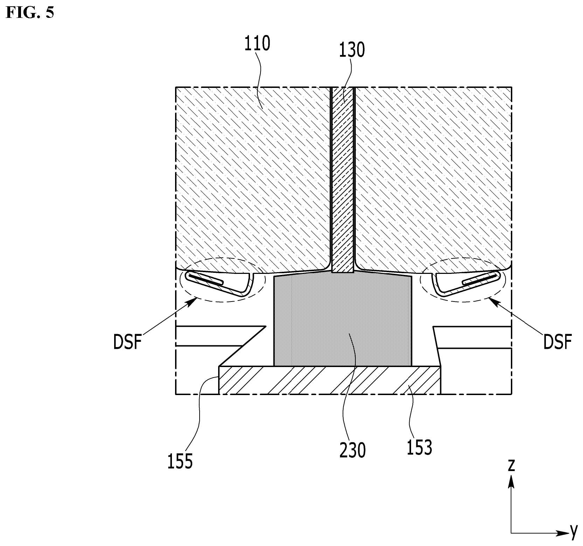

FIG. 4 is a cross-sectional view taken along line IV-IV' of FIG. 1. FIG. 5 is an enlarged view of section A of FIG. 4.

The structure of a battery module 100 according to an embodiment of the present disclosure will be described in detail with reference to FIGS. 2, 4, and 5.

A cell bank 120 may include a plurality of battery cells 110. A cell bank 120 may be formed by stacking a plurality of battery cells 110 along one direction (the y-axis in the drawing). The cell bank 120 may be housed inside a module frame 150. The cell banks 120 may be formed in a plurality. The compression pads 130 may be disposed between the plurality of cell banks 120. The compression pads 130 may be disposed between the plurality of cell banks 120 and/or between the side surface plates 154 of the module frame 150 and the cell banks 120. The compression pad 130 may press the battery cells 110 in a direction opposite to the swelling direction of the battery cells 110 to suppress swelling of the battery cells 110. A plurality of cell banks 120 and compression pads 130 can form a battery cell stack 140.

The battery cell stack 140 may be housed inside the module frame 150. One side of the battery cell stack 140 may be fixed to the upper plate 152. A separation space may be formed between the other side of the battery cell stack 140 and the lower plate 153. The upper side of the battery cell stack 140 may be fixed to the upper plate 152. A separation space may be formed between the lower side of the battery cell stack 140 and the lower plate 153. The battery cell stack 140 may be disposed so that one side makes contact with the thermal conductive resin layer 220 and the elastic member 210, and the other side is supported by the support member 230. The battery cell stack 140 may be disposed so that its upper side makes contact with the thermal conductive resin layer 220 and the elastic member 210. The battery cell stack 140 may be fixed to the upper plate 152 by the thermal conductive resin layer 220 and the elastic member 210 located on the lower surface of the upper plate 152. The lower side of the battery cell stack 140 may be supported by the support member 230. The lower side of the battery cell stack 140 may be supported by the support member 230 formed on the upper surface of the lower plate 153.

A battery cell stack 140 including a cell bank 120 and a compression pad 130 may be housed in the module frame 150. A thermal conductive resin layer 220 and a support member may be formed on the inner side surface of the module frame 150. A thermal conductive resin layer 220 may be formed on the lower surface of the upper plate 152 of the module frame 150. A support member 230 may be formed on the upper surface of the lower plate 153 of the module frame 150. When the upper side of the battery cell stack 140 is fixed to the upper plate 152 of the module frame 150, a separation space may be formed between the lower side of the battery cell stack 140 and the lower plate 153. A support member 230 disposed in the separation space between the battery cell stack 140 and the lower plate 153 may support the lower side of the battery cell stack 140. The module frame 150 may be formed with a venting hole 155 that discharges gases generated in the battery cells 110 to the outside. The venting hole 155 may be formed in the lower plate 153 of the module frame 150. The venting hole 155 and the support member 230 may be formed in mutually different regions of the lower plate 153. Referring to FIG. 4, the support member 230 may be disposed below the compression pad 130 on the lower plate 153, and the venting hole 155 may be formed in a region other than the region where the support member 230 is disposed.

The elastic member 210 may be disposed to wrap at least a part of the battery cell stack 140. The elastic member 210 may be disposed to make contact with the upper surface and both side surfaces of the battery cell stack 140. The elastic member 210 may also be disposed to make contact with the upper surface of the battery cell stack 140 and the outer side surface of the side surface plate 154 of the module frame 150. The elastic member 210 may have a shape that is at least partially bent. The elastic member 210 may include an extension part 213 formed to extend long, and a first bent part 211 and a second bent part 212 that are bent in a direction perpendicular to the extension direction of the extension part 213 from each of both ends of the extension part 213. The elastic member 210 may be disposed so that the extension part 213 makes contact with the upper surface of the battery cell stack 140, and the first bent part 211 and the second bent part 212 each make contact with both side surfaces of the battery cell stack 140. The elastic member 210 may also be disposed so that the extension part 213 makes contact with the upper surface of the battery cell stack 140, and the first bent part 211 and the second bent part 212 each make contact with the outer side surface of the side surface plate 154. The extension part 213 of the elastic member 210 may be disposed between the upper surface of the battery cell stack 140 and the lower surface of the upper plate 152. The extension part 213 of the elastic member 210 may be fixed by a method, such as adhering it to the lower surface of the upper plate 152. The first bent part 211 and the second bent part 212 may be respectively disposed between both side surfaces of the battery cell stack 140 and the side surface plate 154 of the module frame 150. The first bent part 211 and the second bent part 212 may be fixed between both side surfaces of the battery cell stack 140 and the side surface plate 154 of the module frame 150. The first bent part 211 and the second bent part 212 may be fitted and fixed between both side surfaces of the battery cell stack 140 and the side surface plate 154 of the module frame 150. The first bent part 211 and the second bent part 212 may also be fixed in a state of making contact with the outer side surface of the side surface plate 154. In this case, the first bent part 211 and the second bent part 212 may be fixed to the side surface plate 154 by welding them to the outer side surface of the side surface plate 154 or by fitting them into grooves formed in the outer side surface of the side surface plate 154. An elastic member 210 fixed to the upper plate 152 uses their elastic force to hold the upper surface and both side surfaces of the battery cell stack 140, so that the upper side of the battery cell stack 140 may be fixed to the upper plate 152. The elastic members 210 may be formed in a plurality. As shown in FIG. 2, a plurality of elastic members 210 may be disposed so as to be spaced apart from each other along the longitudinal direction of the battery module 100. Here, the longitudinal direction of the battery module 100 refers to the direction in which the end plates 170 disposed at the front and rear of the battery cell stack 140 face each other (x-axis direction in the drawing), which is a direction perpendicular to the width direction of the battery module 100 (y-axis direction in the drawing).

The thermal conductive resin layer 220 may be formed to make contact with at least a part of the battery cell stack 140. The thermal conductive resin layer 220 may be formed on the inner side surface of the module frame 150. The thermal conductive resin layer 220 may be formed by a method in which it is applied to the inner side surface of the module frame 150 and then cured. The thermal conductive resin layer 220 may be formed to make contact with one side of the battery cell stack 140. The thermal conductive resin layer 220 may be formed on the lower surface of the upper plate 152 and may make contact with the upper side of the battery cell stack 140. The thermal conductive resin layer 220 may fix the battery cell stack 140 to the upper plate 152 of the module frame 150. Specifically, a thermal conductive resin layer 220 is applied to the lower surface of the upper plate 152, and, under the state where the upper side of the battery cell stack 140 makes contact with the thermal conductive resin layer 220, the thermal conductive resin layer 220 is cured, so that the upper side of the battery cell stack 140 may be fixed to the upper plate 152. As previously described, the plurality of elastic members 210 may be disposed so as to be spaced apart from each other along the longitudinal direction of the battery module 100, and the thermal conductive resin layer 220 may be formed between the plurality of elastic members 210 that are spaced apart from each other. As a result, the upper side of the battery cell stack 140 may be fixed to the upper plate 152 by the thermal conductive resin layer 220 and the elastic members 210 formed on the lower surface of the upper plate 152.

The support member 230 is configured to support the battery cell stack 140, and may be formed on the inner surface of the module frame 150. The support member 230 may be formed on the upper surface of the lower plate 153 to support the lower side of the battery cell stack 140. As previously described, the upper side of the battery cell stack 140 may be fixed to the upper plate 152 of the module frame 150. At this time, in order to discharge gases generated in the battery cells 110 and secure minimal assembly tolerances, etc., a separation space may exist between the battery cell stack 140 and the lower plate 153. The support member 230 may be disposed in the separation space between the battery cell stack 140 and the lower plate 153 to support the lower side of the battery cell stack 140.

The support member 230 may have a shape that extends long along the longitudinal direction of the battery module 100. The support member 230 may be located below the compression pad 130 to support the battery cell stack 140. More specifically, referring to FIGS. 4 and 5, the support member 230 may be disposed below the compression pad 130 so that both sides along the width direction of the battery module 100 (the y-axis direction in the drawings) makes contact with at least a part of the lower parts of the cell banks 120 disposed on both sides of the compression pad 130. The support member 230 may be disposed below the compression pad 130 and the cell banks 120 so that the central portion along the width direction of the battery module 100 makes contact with the lower part of the compression pad 130, and both sides make contact with at least a part of the lower parts of the battery cells 110 disposed on both sides of the compression pad 130. At this time, the upper surface of the support member 230 may have a shape that corresponds to the lower surface of the battery cell 110 and the compression pad 130. For example, referring to FIG. 5, a portion of the battery cells 110 disposed on both sides of the compression pad 130 may have a shape that comes down from the lower end of the compression pad 130. In correspondence thereto, the upper surface of the support member 230 may have a shape in which the central portion is formed higher than both sides along the width direction of the battery module 100 (y-axis direction in the drawing). Conversely, if the lower end of the compression pad 130 comes down from the lower ends of the battery cells 110 disposed on both sides, the upper surface of the support member 230 may have a shape in which both sides are formed higher than the central portion along the width direction of the battery module 100. As a result, the support member 230 may stably support the cell bank 120 and the compression pad 130, and also prevent gases or flames generated in any one of the cell banks 120 from being transmitted to other cell banks 120 through the separation space between the battery cell stack 140 and the lower plate 153.

Meanwhile, as shown in FIG. 5, each battery cell 110 may include a double-side folded sealing part DSF having a double-side folded shape. Here, the double-side folded shape refers to a shape formed by folding the sealing part of the cell case at least twice. Specifically, the double-side folded sealing part DSF of the battery cell 110 may be a portion 114sc formed by bonding both side surfaces 114c of the cell case 114 that connect the two ends 114a, 114b of the cell case 114, as described in FIG. 3. In FIG. 3, the electrode leads 111, 112 may be located at both ends of the battery cell 110, which is located along a direction perpendicular to the double-fold sealing part DSF of the battery cell 110, and the battery cell 110 may have a rectangular structure formed long in the direction in which the electrode leads 111 and 112 protrude. As shown in FIG. 5, in order to prevent the double-fold sealing part DSF from being damaged, the support member 230 may be formed to support a region of the battery cell 110 other than the double-fold sealing part DSF. The support member 230 may be formed integrally with the lower plate 153 of the module frame 150, or may be manufactured separately and adhered to the lower plate 153.

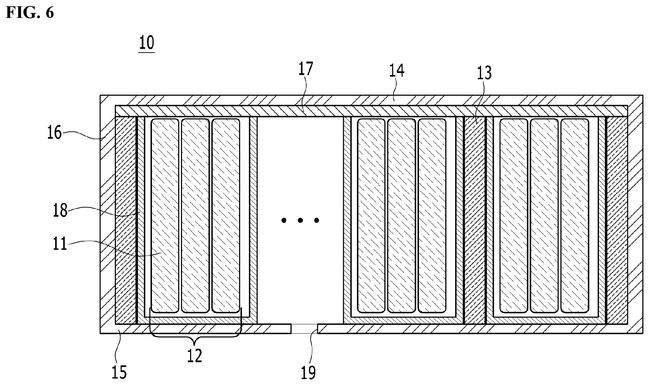

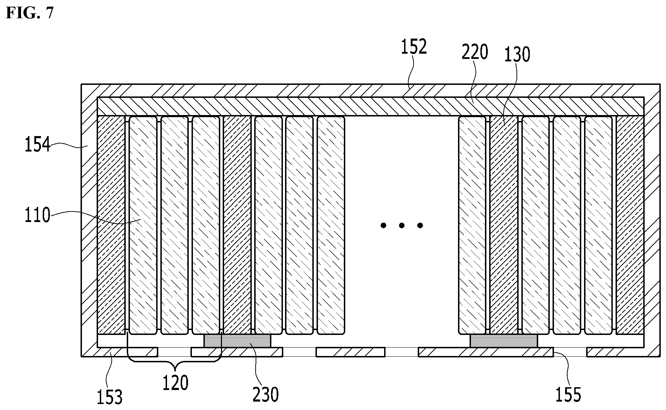

FIG. 6 is a comparative example of the present disclosure, showing the internal structure of a battery module 10 according to a comparative example. FIG. 7 is a diagram showing the internal structure of a battery module 100 according to an embodiment of the present disclosure.

Referring to FIGS. 6 and 7 together, the difference between a battery module 100 according to an embodiment of the present disclosure and a battery module 10 according to a comparative example, as well as the effects of the present disclosure, will be described.

First, referring to FIG. 6, a battery module 10 according to a comparative example may include a plurality of cell banks 12 in which a plurality of battery cells 11 are stacked, a compression pad 13 disposed between the plurality of cell banks 12, a module frame in which the cell banks 12 and the compression pad 13 are housed, a thermal conductive resin layer 17 formed on the lower surface of the upper plate 14 of the module frame, and a bank frame 18 made of mica (MICA) that wraps the side surface and lower surface of each cell bank 12. The lower plate 15 of the module frame may be formed with a venting hole 19. The cell bank 12 and the compression pad 13 may be fixed to the upper plate 14 by the thermal conductive resin layer 17 formed on the lower surface of the upper plate 14. At this time, a separation space may be formed between the cell bank 12 and the lower plate 15. According to this structure, if the thermal conductive resin layer 17 is cracked due to swelling of the battery cell 11 or external impact, the cell bank 12 may fall downward due to its own weight and be damaged. Further, the battery module 10 according to the comparative example may be inefficient in terms of cost and energy density because each cell bank 12 is wrapped by a bank frame 18 in order to prevent gases or flames generated in any one of the cell banks 12 from being transmitted to the other cell banks 12.

On the other hand, referring to FIG. 7, the battery module 100 according to an embodiment of the present disclosure may include a support member 230 that is disposed in the separation space between the battery cell stack 140 and the lower plate 153 to support the lower side of the battery cell stack 140. The weight, external impact, vibration, etc. of the battery cell stack 140 may be distributed to the module frame 150 through the support member 230, thereby improving structural stability. Even if the thermal conductive resin layer 220 is cracked due to swelling of the battery cells 110 or external impact, the support member 230 supports the battery cell stack 140, thereby preventing the battery cell stack 140 from falling downward and being damaged.

The support member 230 of the present disclosure may be disposed below the compression pad 130 this is disposed between the plurality of cell banks 120. Thereby, it is possible to prevent gases, flames, etc. generated in any one of the cell banks 120 from being transmitted to other cell banks 120 through the separation space between the battery cell stack 140 and the lower plate 153. Because the venting paths of each cell bank 120 are separated, gases, flames, etc. are effectively discharged to the outside without backflow.

The battery module 100 according to the present disclosure does not include a structure similar to the bank frame 18 of the battery module 10 according to the comparative example. Therefore, it is advantageous in terms of cost, and energy density can be improved by further disposing the battery cells 110 in the space where the frame wrapping the cell banks 120 is removed, or by forming the battery cells 110 to be larger.

According to an embodiment of the present disclosure, one or more battery modules 100 may be packaged inside a pack case to form a battery pack. At this time, the lower part of the pack case may be formed with a venting hole that discharges gases or flames generated in the battery cells 110 to the outside. Further, the pack case may include a pack cover that covers the upper part of the battery module 100. The pack cover may dissipate heat generated in the battery cells 110 and transferred through the thermal conductive resin layer 220 to the outside. A heat sink that releases heat generated in the battery cells 110 to the outside may also be disposed on the upper part of the pack cover

The above-mentioned battery module and battery pack including the same can be applied to various devices. Such a device can be applied to a vehicle means such as an electric bicycle, an electric vehicle, or a hybrid vehicle, but the present disclosure is not limited thereto, and is applicable to various devices capable of using a battery module and a battery pack including the same, which also falls under the scope of the present disclosure

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: battery module
10: battery cell
120: cell bank
130: compression pad
140: battery cell stack
150: module frame
151: U-shaped frame
152: upper plate
153: lower plate
154: side surface plate
155: venting hole
160: busbar frame assembly
170: end plate
210: elastic member
211: first bent part
212: second bent part
213: extension part
220: thermal conductive resin layer
230: support member

## Claims

1. A battery module comprising:
a battery cell stack including a plurality of cell banks formed by stacking a plurality of battery cells;
a module frame in which the battery cell stack is housed;
a thermal conductive resin layer that is formed on an inner side surface of the module frame so as to make contact with one side of the battery cell stack, and fixes one side of the battery cell stack to the module frame; and
a support member that supports the other side of the battery cell stack between the battery cell stack and the module frame.

2. The battery module according to claim 1,
wherein the thermal conductive resin layer is formed on a lower surface of an upper plate of the module frame and fixes an upper side of the battery cell stack to the upper plate.

3. The battery module according to claim 2,
wherein the support member is formed on an upper surface of a lower plate of the module frame and supports a lower side of the battery cell stack.

4. The battery module according to claim 3,
wherein the plurality of battery cells are stacked along a width direction of the battery module, and
the support member has a shape that extends along a longitudinal direction of the battery module, which is perpendicular to the width direction of the battery module.

5. The battery module according to claim 4,
wherein the battery cell stack further comprises a compression pad disposed between the plurality of cell banks, and
the support member is disposed below the compression pad.

6. The battery module according to claim 5,
wherein the support member is disposed below the compression pad so that both sides of the battery module along the width direction make contact with at least a part of the lower part of the cell banks disposed on both sides of the compression pad.

7. The battery module according to claim 6,
wherein the upper surface of the support member has a shape that corresponds to the lower surface of the compression pad and the cell bank.

8. The battery module according to claim 3,
wherein the lower plate is formed with a venting hole.

9. The battery module according to claim 8,
wherein the venting hole and the support member are formed in mutually different regions of the lower plate.

10. The battery module according to claim 3,
further comprising an elastic member that is disposed to wrap at least a part of the battery cell stack and fixes the battery cell stack to the upper plate.

11. The battery module according to claim 10,
wherein the elastic member is disposed to make contact with the upper surface and both side surfaces of the battery cell stack.

12. The battery module according to claim 11,
wherein the elastic member comprises:
an extension part formed to extend long; and
a first bent part and a second bent part that are bent in a direction perpendicular to the extension direction of the extension part from each of both ends of the extension part.

13. The battery module according to claim 12,
wherein the elastic member is disposed so that the extension part makes contact with the upper surface of the battery cell stack, and the first bent part and the second bent part each make contact with both side surfaces of the battery cell stack.

14. The battery module according to claim 13,
wherein the extension part is disposed between the upper surface of the battery cell stack and the lower surface of the upper plate to be fixed to the upper plate.

15. The battery module according to claim 14,
wherein the first bent part and the second bent part are respectively fitted and fixed between each of the both side surfaces of the battery cell stack and the side surface plates of the module frame.

16. The battery module according to claim 15,
wherein the elastic members are formed in a plurality,
the plurality of elastic members are disposed so as to be spaced apart from each other along the longitudinal direction of the battery module, and
the thermal conductive resin layer is formed between the plurality of elastic members that are spaced apart from each other.

17. A battery pack comprising:
the battery module according to claim 1; and
a pack case in which the battery module is packaged inside.
